# FASCICULE DE BREVET EUROPEEN

(11) **EP 3 843 983 B1**
(45) Date de publication et mention de la délivrance du brevet: **15.06.2022**
(21) Numéro de dépôt: 19778570.2
(22) Date de dépôt: 23.08.2019
(51) Int. Cl.: B29C 70/48, B29C 70/54, B29C 70/68, B29B 11/16, B29B 15/12, B29D 99/00, B29C 70/24, F01D 5/28, B29C 70/34, B29B 13/06, B29C 31/08, B29C 37/00, B29L 31/08

(54) **PROCEDE DE FABRICATION D'UNE PIECE COMPOSITE DE TURBOMACHINE**
VERFAHREN ZUR HERSTELLUNG EINES TURBOMASCHINENVERBUNDTEILS
METHOD FOR MANUFACTURING A TURBOMACHINE COMPOSITE PART

(30) Priorité: 29.08.2018 FR 1857773
(43) Date de publication de la demande: 07.07.2021
(73) Titulaire: SAFRAN, 75015 Paris (FR)
(72) Inventeur: DUNAUD, Sébastien, 77550 MOISSY-CRAMAYEL (FR); COUPE, Dominique, Marie, Christian, 77550 MOISSY-CRAMAYEL (FR); FOUSSARD, Olivier, 77550 MOISSY-CRAMAYEL (FR); PAYEN, Didier, 77550 MOISSY-CRAMAYEL (FR); TOUZE, Adrien, 77550 MOISSY-CRAMAYEL (FR)
(74) Mandataire: Gevers & Orès
(86) Numéro de dépôt international: PCT/FR2019/051953
(87) Numéro de publication internationale: WO 2020/043980

(56) Documents cités:
- WO-A1-2011/098734
- WO-A1-2015/049474
- US-A1- 2017 232 691

## Description

### DOMAINE TECHNIQUE

La présente invention concerne le domaine de la fabrication d'une pièce composite de turbomachine telle qu'une aube de soufflante.

### ETAT DE L'ART

L'état de l'art comprend notamment les documents EP-A1-1 526 285, WO-A2-2013/088037, WO-A1-2015/049474, US-A1-2017/232691 WO-A1-2011/098734 et FR-A1-3 062 659.

Il est connu de fabriquer des pièces d'une turbomachine en matériau composite comportant une structure de renfort fibreuse noyée dans une matrice polymérique. La structure comprend une préforme fibreuse obtenue par tissage 3D par l'intermédiaire d'un métier à tisser du type Jacquard. Le métier à tisser permet de fabriquer une préforme tridimensionnelle (3D) par tissage multicouche entre une pluralité de couches de fils de chaîne et une pluralité de couches de fils de trame. Les fils sont par exemple des fils de carbone.

La préforme est en général réalisée à plat c'est-à-dire que la préforme obtenue en sortie du métier à tisser a une forme générale plate, l'épaisseur de la préforme pouvant toutefois varier.

La préforme doit ensuite être mise en forme pour adopter une forme générale proche de celle de la pièce à fabriquer. Cette mise en forme s'effectue manuellement sur une contre forme, qui est en général l'empreinte du moule qui sera utilisé pour la réalisation de la pièce composite par injection de résine thermodurcissable.

Lors de cette étape de mise en forme, appelée formage, la préforme est déformée et décadrée, afin de déplacer les fibres suivant les spécifications de la pièce finie. Pour se faire, la préforme intègre des traceurs (fils de verre) dont la position théorique finale est projetée sur l'empreinte. L'opérateur déplace et positionne donc chaque zone de la préforme en fonction de la projection de ces repères. L'enjeu du formage est que cette mise en forme se fasse la plus naturellement possible sans altérer le motif de tissage en surface et au cœur de la préforme. Il est important que les fibres soient malléables pour effectuer ces manipulations surtout dans les zones les plus épaisses de la préforme. Cette opération requiert de mouiller abondamment la préforme car les fibres humides glissent mieux entre elles une fois lubrifiées par l'eau.

Une fois formée, la préforme doit être séchée afin d'évacuer l'eau que l'on ne souhaite pas conserver dans le moule lors de l'injection de la résine. En effet, la présence d'eau est un inconvénient majeur qui pourrait être source de porosité dans la pièce injectée. Dans la technique actuelle, l'opération de séchage est réalisée en autoclave ou en étuve.

Pour l'étape d'injection, le moule dans lequel la préforme est installée est fermé puis de la résine thermodurcissable est injectée dans le moule. La préforme s'imprègne de résine qui va polymériser et générer une pièce composite rigide.

Cette pièce rigide, brut de moulage, possède un état de surface particulier inhérent au renfort composite et à son embuvage lié au tissage. Cet état de surface ne convient pas toujours pour les fonctionnalités aérodynamiques d'une pièce de turbomachine, comme une aube de soufflante. Des solutions, comme l'ajout d'un voile de surface, sont étudiées, en espérant gagner sur l'état de surface du brut d'injection sans augmenter la masse et l'épaisseur de la structure fibreuse. Un gain sur l'amélioration des niveaux d'apparition des premiers endommagements de la pièce est aussi envisageable.

Ce voile de surface est un tissu sec de faible épaisseur (par exemple en fibre de carbone) qui recouvre la préforme avant l'injection de la résine. Le voile est donc imprégné de résine en même temps que la préforme. Le voile est toutefois difficile à mettre en forme et à positionner sur la préforme. En effet, le tissu sec est très fragile et donc très sensible aux déformations liées à sa manipulation : décadrage, ondulation, fibres arrachées, etc.

La présente invention propose une solution à ce problème, qui est simple, efficace et économique.

### EXPOSE DE L'INVENTION

L'invention propose un procédé de fabrication d'une pièce composite de turbomachine, telle qu'une aube de soufflante, cette pièce comportant une structure fibreuse qui comporte une préforme fibreuse tridimensionnelle revêtue d'un voile fibreux de surface, et qui est noyée dans une matrice polymérique, le procédé comprenant les étapes de :
- formage du voile de surface afin de la mettre en forme,
- mouillage et formage de la préforme afin de la mettre en forme, et
- fermeture du moule, séchage de la structure fibreuse et injection de résine thermodurcissable dans le moule afin de former ladite matrice, le voile de surface étant mouillée avant et/ou pendant
son formage qui est réalisé dans une empreinte d'un moule, le formage de la préforme étant réalisé directement sur le voile de surface dans l'empreinte du moule.

Pour faciliter la fabrication du voile par tissage de fibres, ces fibres sont enduites d'une substance qui facilite le glissement des fibres entre elles. La manipulation du voile et son formage, sans mouillage, entraîne des déplacements involontaires des fibres et une détérioration du voile. Le mouillage de la préforme permet de diluer la substance précitée et de limiter le glissement des fibres entre elles, ce qui a pour avantage de limiter le risque de détérioration du voile lors de sa manipulation et son formage. Par ailleurs, le séchage du voile permet de sécher la substance qui va durcir et rigidifier le voile en solidarisant les fibres entre elles, ce qui est avantageux en particulier si ce séchage a lieu avant le formage du voile.

Le voile de surface comprend des fibres par exemple en carbone. Il peut s'agir :
- d'une nappe Uni Directionnelle (UD) obtenue par des fibres unidirectionnelles cousues les unes aux autres,
- d'un tissu obtenu par tissage de rubans, orientés par exemple dans des directions perpendiculaires,
- d'un tissu comportant deux nappes Uni Directionnelles (UD) superposées et cousues entre elles, les fibres des deux nappes étant orientées dans des directions différentes et par exemple perpendiculaires,
- etc.

Le procédé selon l'invention peut comprendre une ou plusieurs des caractéristiques suivantes, prises isolément les unes des autres ou en combinaison les unes avec les autres :
- le voile de surface est mouillé et séchée en étuve avant son formage,
- avant son séchage, le voile de surface est revêtu d'un tissu de manipulation, et l'ensemble est recouvert d'une poche à vide et soumis à un vide partiel lors du séchage,
- le tissu de manipulation est utilisé pour positionner le voile de surface séché dans l'empreinte du moule,
- avant son mouillage, le voile de surface est immobilisé sur un support par un adhésif,
- le voile de surface est remouillé pendant son formage,
- le voile de surface est découpé avant son mouillage, et/ou après son mouillage, et/ou pendant son formage,
- la préforme et le voile de surface sont mouillés avec de l'eau et/ou un tackifiant, l'empreinte du moule étant éventuellement mouillée avec de l'eau et/ou un tackifiant avant le formage du voile de surface,
- le moule est fermé en y rapportant un contre moule comportant également une empreinte dans laquelle est mise en forme un autre voile de surface,
- le voile de surface est formé par des rubans tissés, ou par deux nappes bidirectionnelles superposées et cousues entre elles.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est un schéma bloc illustrant des étapes d'un procédé selon l'invention,
- les figures 2 et 3 sont des vues schématiques en perspective d'une préforme avant et après formage,
- la figure 4 est une vue schématique en perspective d'un moule de fabrication d'une pièce composite,
- les figures 5a, 5b et 5c représentent de manière très schématique différents voiles de surface pouvant être utilisés dans le procédé selon l'invention,
- les figures 6 et 7 sont des schémas blocs illustrant des variantes de réalisation du procédé selon l'invention,
- les figures 8 à 26 illustrent des étapes du procédé de la figure 6, et
- les figures 27 à 40 illustrent des étapes du procédé de la figure 7.

### DESCRIPTION DETAILLEE

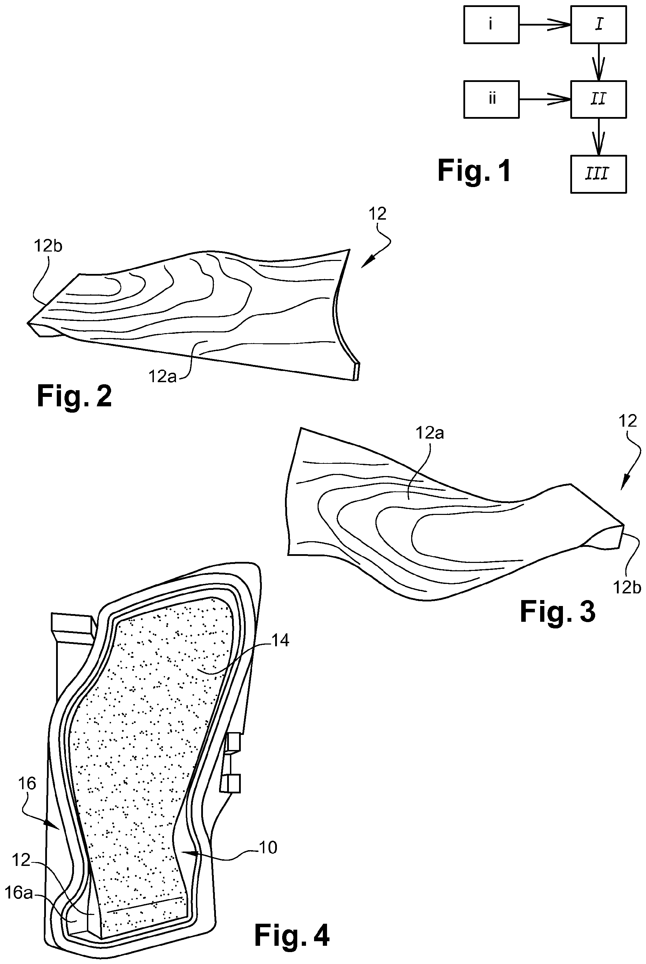

La figure 1 est un schéma bloc illustrant des étapes d'un procédé selon l'invention de fabrication d'une pièce composite 10 de turbomachine telle qu'une aube de soufflante visible à la figure 4.

Cette pièce comporte une structure fibreuse qui comporte d'une part une préforme fibreuse 12 tridimensionnelle visible à la figure 3 et d'autre part au moins un voile fibreux 14 de surface qui recouvre au moins une partie de la préforme. La structure fibreuse est noyée dans une matrice polymérique à base de résine thermodurcissable de façon à obtenir une pièce rigide.

Comme évoqué dans ce qui précède, la préforme 12 est réalisée par tissage tridimensionnel de fils au moyen d'un métier à tisser, et a une forme générale plane visible à la figure 2 en sortie du métier à tisser. Cette préforme 12 d'aube de soufflante comprend une partie 12a destinée à s'étendre dans la pale de l'aube, et une partie 12b destinée à s'étendre dans le pied de l'aube.

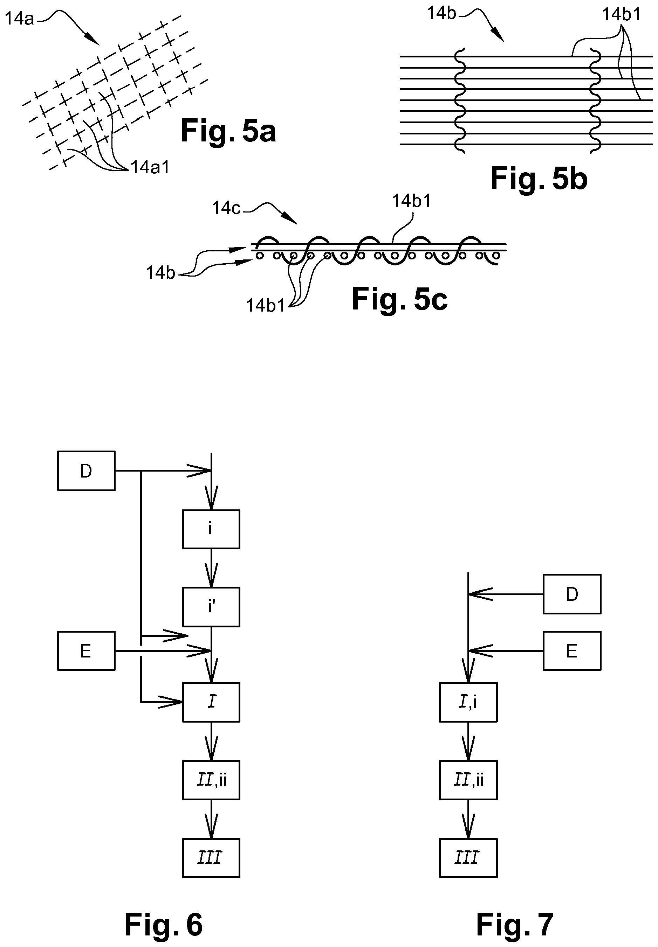

Le voile de surface 14 comprend des fibres par exemple en carbone et peut être :
- un tissu 14a visible à la figure 5a, obtenu par tissage de rubans 14a1, orientés par exemple dans des directions perpendiculaires,
- une nappe 14b Uni Directionnelle (UD) visible à la figure 5b, obtenue par des fibres unidirectionnelles 14b1 cousues les unes aux autres,
- un tissu 14c comportant deux nappes 14b Uni Directionnelles (UD) superposées et cousues entre elles, les fibres 14b1 des deux nappes 14b étant orientées dans des directions différentes et par exemple perpendiculaires,
- etc.

L'état de surface d'une préforme 12 (figures 2 et 3) est très irrégulier et un voile de surface 14 est en général déposée sur les deux faces de la partie 12a, destinées à être situées respectivement du côté de l'intrados et de l'extrados de la pale, pour améliorer cet état de surface (figure 4). Chaque voile 14 peut s'étendre jusqu'à la partie 12b de la préforme 12.

Le procédé de la figure 1 comprend des étapes de :
(I) formage du voile de surface 14,
(II) formage de la préforme 12, et
(III) injection de résine thermodurcissable dans la structure fibreuse formée par le voile 14 et la préforme 12.

Avantageusement, le formage (I) du voile de surface 14 est réalisé en positionnant le voile dans une empreinte 16a d'un moule 16 (figure 4) et en le déformant pour qu'il épouse la forme de cette empreinte. Ceci permet de mettre en forme le voile 14 avant la propre mise en forme de la préforme 12 (II). La préforme est également mise en forme en positionnant la préforme dans l'empreinte 16a du moule 16, directement sur le voile 14, et en la déformant pour qu'elle épouse la forme de l'empreinte.

Le moule 16 est ensuite fermé, en rapportant un contre moule sur le moule, la structure fibreuse est séchée et la résine thermodurcissable est injectée dans le moule afin d'imprégner la structure fibreuse.

Il est connu de (ii) mouiller la préforme 12 lors de son formage (II). Pour faciliter la manipulation du voile 14 et en particulier éviter sa détérioration, l'invention propose de (i) mouiller également le voile avant et/ou pendant son formage (I).

Les figures 6 et 7 illustrent deux variantes de réalisation du procédé.

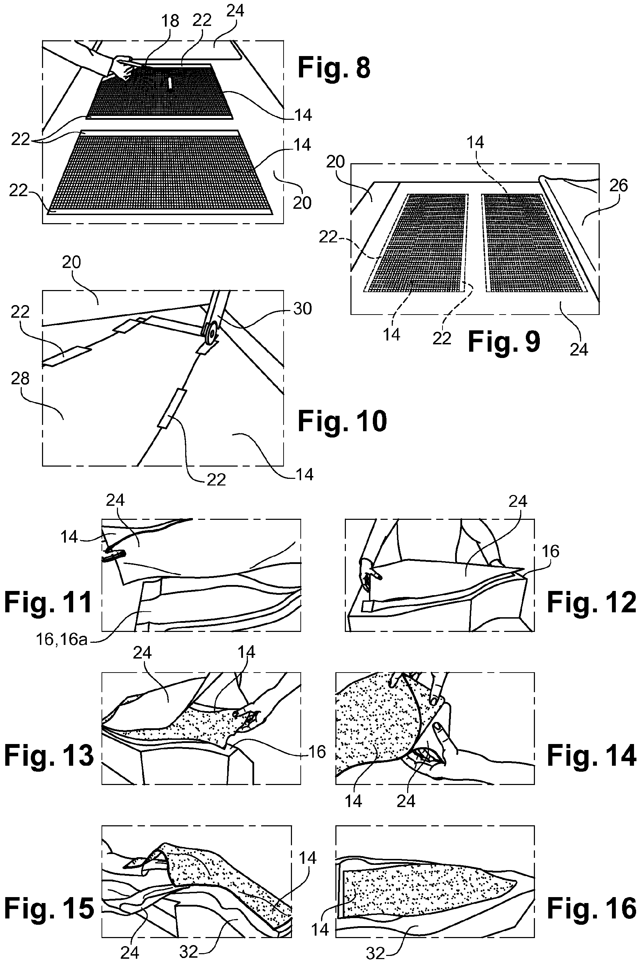

Le procédé de la figure 6, qui est également illustré par les figures 8 à 26, utilise un tissu 14a à rubans tissés (figure 5a).

Le procédé de la figure 6 comprend une première étape i consistant à mouiller le voile 14, ici avant son formage qui a lieu à l'étape I.

La figure 8 illustre cette première étape i pendant laquelle un opérateur peut pulvériser, par exemple de l'eau, sur le voile 14 et en particulier sur chacun des deux voiles 14 de la pièce composite à fabriquer. La pulvérisation de l'eau est réalisée au moyen d'un outil 18 approprié.

Préalablement à cette étape i, les voiles 14 peuvent être prédécoupés et peuvent donc subir une étape de découpe D pour les mettre à des côtes prédéterminées. Par ailleurs, les voiles 14 peuvent être immobilisés sur un support 20 tel que la surface supérieure d'un établi, avant de réaliser le mouillage. Cette immobilisation peut être simplement réalisée au moyen d'un adhésif en bande 22 qui est disposé sur deux côtés opposés de chaque voile 14 par exemple.

L'étape suivante i' consiste à sécher le voile 14 avant de le mettre en forme. Le séchage confère au voile une raideur supplémentaire qui le end beaucoup moins sujet à la déformation. Pour cela, et comme illustré à la figure 9, le voile 14 est recouvert d'un tissu de manipulation 24 qui facilitera le transfert du voile depuis le support 20 jusqu'au moule 16. Le tissu 24 est avantageusement réalisé dans un matériau perméable de façon à pouvoir aspirer l'air et l'humidité à travers lui. Le voile 14 et le tissu 24 sont ensuite recouverts d'une poche à vide 26 qui permet de soumettre le voile à un vide partiel. L'ensemble est mis à l'étuve et donc sous vide partiel, par exemple à une température inférieure ou égale à 110°C, et pendant une durée suffisante pour obtenir un voile 14 sec.

L'étape i' peut être suivie d'une nouvelle étape D de découpe du voile 14, par exemple au moyen d'un gabarit 28 posé directement sur le voile, et éventuellement immobilisé sur le voile par un adhésif en bande 22 (figure 10). La découpe du voile peut simultanément entraîner la découpe du tissu de manipulation 24 situé ici sous le voile. Cette découpe D, ainsi que la précédente découpe, peuvent être réalisées par tout outil approprié et par exemple une paire de ciseaux, une molette 30, une lame, etc.

L'étape suivante représentée aux figures 11 à 13 consiste alors à transférer le voile 14 du support 20 jusque dans le moule 16. Préalablement à ce transfert, de l'eau peut éventuellement être projetée dans le moule (étape E à la figure 6). Le tissu de manipulation 24 permet de mieux saisir le voile 14 sans le détériorer et de faciliter son positionnement dans l'empreinte du moule 16. Une fois le voile positionné, le tissu 24 est retiré. La même opération est réalisée avec le second voile 14 qui est positionné dans l'empreinte du contre moule 32, comme représenté aux figures 14 à 16.

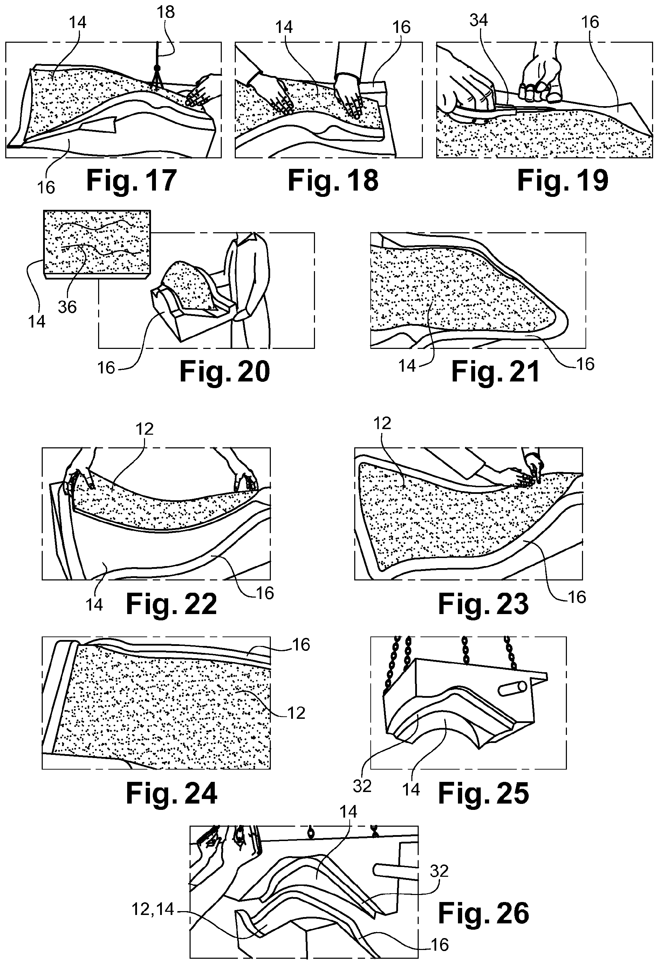

L'étape suivante I consiste à mettre en forme le voile 14 dans l'empreinte du moule 16, de préférence en le mouillant à nouveau au moyen de l'outil 18 pour le rendre plus flexible (figure 17). La mise en forme est réalisée manuellement (figure 18) et peut nécessiter une opération de découpe supplémentaire des bords du voile par exemple au moyen d'une paire de ciseaux 34 (figure 19), pour éviter que le voile présente des renflements 36 (figure 20) et pour faire en sorte qu'il tapisse intégralement le fond de l'empreinte du moule 16 (figure 21). La même étape I est réalisée sur les deux voiles 14, et donc sur le moule 16 et le contre moule 24.

L'étape suivante II consiste à mettre en forme la préforme 12 dans le moule 16, directement sur le voile 14 préalablement installé, en le mouillant (étape ii) également avec de l'eau par exemple (figure 22). La mise en forme est réalisée manuellement (figure 23) et permet de faire en sorte que la préforme soit calée dans l'empreinte et épouse parfaitement la forme de celle-ci (figure 24).

Le contre moule 32 est alors rapporté et fixé sur le moule (figures 25 et 26) ce qui permet au second voile 14 d'être appliqué sur la face encore nue de la préforme 12. L'outillage ainsi assemblé est alors mis en étuve afin d'être séché (par exemple en le chauffant à une température inférieure ou égale à 120°C) et avant de subir l'opération d'injection de résine (étape III).

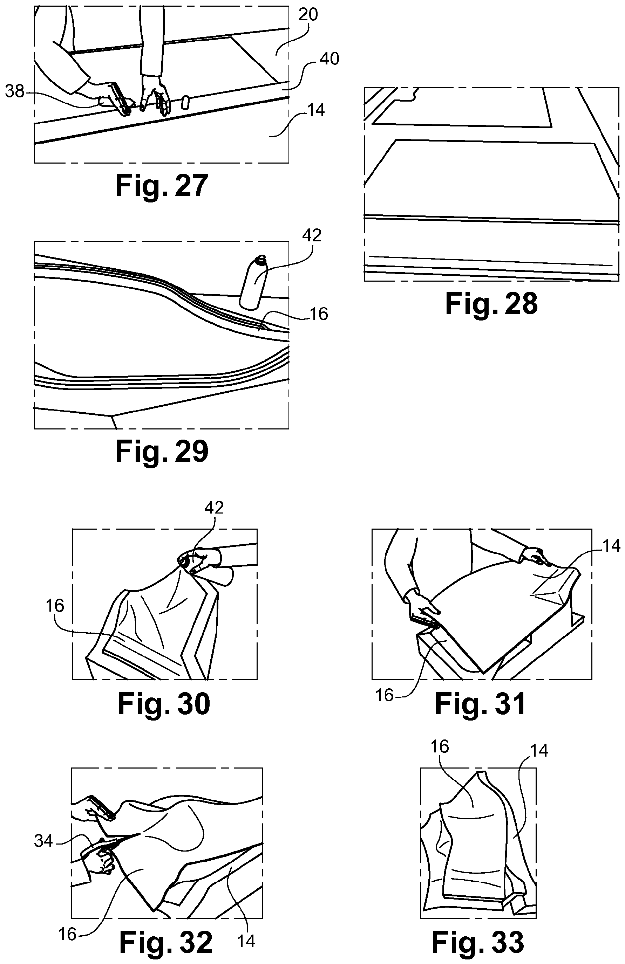

Le procédé de la figure 7, qui est également illustré par les figures 27 à 40, utilise un tissu 14c à nappes cousues (figure 5c).

Ce tissu 14c a une meilleure tenue que le tissu 14a utilisé dans le précédent mode de réalisation et peut subir directement une découpe (sans mouillage et séchage préalables). La découpe D du voile 14 est par exemple réalisée au moyen d'une lame 38 du type cutter et d'une règle 40, sur un support 20 (figure 27). Les deux voiles 14 de la pièce à fabriquer sont ainsi découpés (figure 28).

Préalablement au transfert du voile 14 dans le moule 16, de l'eau ou un tackifiant peut éventuellement être projetée dans le moule 16 (étape E à la figure 7). Le tackifiant est par exemple projeté au moyen d'un récipient 42 contenant du tackifiant sous pression (figures 29 et 30). Un tackifiant est une substance collante, ici par exemple à base aqueuse.

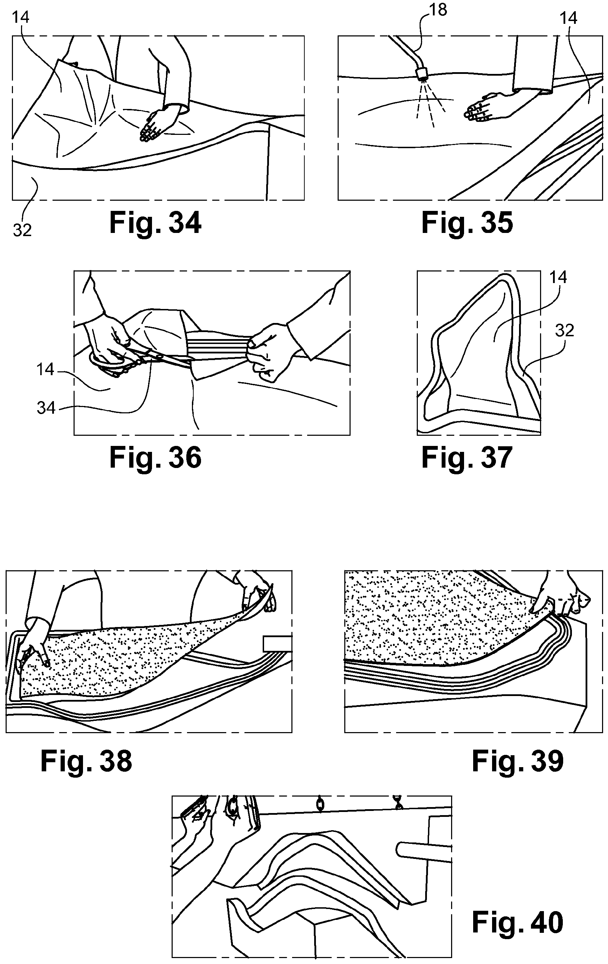

L'étape suivante représentée aux figures 30 à 33 consiste alors à mettre en forme (étape I) un premier voile 14 dans l'empreinte du moule 16, en le mouillant éventuellement (étape i) au moyen de l'outil 18 pour le rendre plus flexible. Ce mouillage peut être facultatif si le mouillage préalable du moule 16 est suffisant pour mouiller et assouplir le voile lors de son formage. La mise en forme est réalisée manuellement (figures 30 et 31) et peut nécessiter une opération de découpe supplémentaire des bords du voile par exemple au moyen d'une paire de ciseaux 34 (figure 32), pour faire en sorte que le voile tapisse intégralement le fond de l'empreinte du moule 16 (figure 33). Des opérations similaires sont réalisées avec le second voile 14 dans le contre moule 32, comme illustré aux figures 34 à 37.

L'étape suivante II consiste à mettre en forme la préforme 12 dans le moule 16, directement sur le voile 14 préalablement installé, en le mouillant (étape ii) également avec de l'eau ou le tackifiant par exemple. La mise en forme est réalisée manuellement et permet de faire en sorte que la préforme soit calée dans l'empreinte et épouse parfaitement la forme de celle-ci (figures 38 et 39).

Le contre moule 32 est alors rapporté et fixé sur le moule (figure 40) ce qui permet au second voile 14 d'être appliqué sur la face encore nue de la préforme 12. L'outillage ainsi assemblé est alors mis en étuve afin d'être séché (par exemple en le chauffant à une température inférieur ou égale à 120°C) et avant de subir l'opération d'injection de résine (étape III).

## Revendications

1. Procédé de fabrication d'une pièce composite (10) de turbomachine, telle qu'une aube de soufflante, cette pièce comportant une structure fibreuse qui comporte une préforme fibreuse (12) tridimensionnelle revêtue d'au moins un voile fibreux (14) de surface, et qui est noyée dans une matrice polymérique, le procédé comprenant les étapes de :
- formage (I) du voile de surface afin de la mettre en forme,
- mouillage (ii) et formage (II) de la préforme (12) afin de la mettre en forme, et
- fermeture du moule (16), séchage de la structure fibreuse et injection de résine thermodurcissable dans le moule afin de former ladite matrice, le voile de surface (14) étant mouillée (i) avant et/ou pendant son formage (I) qui est réalisé dans une empreinte (16a) d'un moule (16), le formage de la préforme étant réalisé directement sur le voile de surface dans l'empreinte du moule.

2. Procédé selon la revendication 1, dans lequel le voile de surface (14) est mouillé et séché en étuve avant son formage (I).

3. Procédé selon la revendication 2, dans lequel, avant son séchage, le voile de surface (14) est revêtu d'un tissu de manipulation (24), et l'ensemble est recouvert d'une poche à vide (26) et soumis à un vide partiel lors du séchage.

4. Procédé selon la revendication 3, dans lequel le tissu de manipulation (24) est utilisé pour positionner le voile de surface (14) séché dans l'empreinte (16a) du moule (16).

5. Procédé selon l'une des revendications 2 à 4, dans lequel, avant son mouillage (I), le voile de surface (14) est immobilisé sur un support (20) par un adhésif (22).

6. Procédé selon l'une des revendications 2 à 5, dans lequel le voile de surface (14) est remouillé pendant son formage (I).

7. Procédé selon l'une des revendications 1 à 6, dans lequel le voile de surface (14) est découpé (D) avant son mouillage (i), et/ou après son mouillage, et/ou pendant son formage (I).

8. Procédé selon l'une des revendications 1 à 7, dans lequel la préforme (12) et le voile de surface (14) sont mouillés avec de l'eau et/ou un tackifiant, l'empreinte (16a) du moule (16) étant éventuellement mouillée avec de l'eau et/ou un tackifiant avant le formage (I) du voile de surface.

9. Procédé selon l'une des revendications 1 à 8, dans lequel le moule (16) est fermé en y rapportant un contre moule (32) comportant également une empreinte (16a) dans laquelle est mise en forme un autre voile de surface (14).

10. Procédé selon l'une des revendications 1 à 9, dans lequel le voile de surface (14) est formé par des rubans (14a1) tissés, ou par deux nappes (14b) bidirectionnelles superposées et cousues entre elles.

## Patentansprüche

1. Verfahren zur Herstellung eines Turbomaschinenverbundteils (10), wie einer Gebläseschaufel, wobei dieses Teil eine faserige Struktur umfasst, die eine dreidimensionale faserige Vorform (12) umfasst, die mit mindestens einer faserigen Oberflächenschale (14) beschichtet ist und die in eine Polymermatrix getaucht ist, wobei das Verfahren die folgenden Schritte umfasst:
- Formgebung (I) der faserigen Oberflächenschale, um sie in Form zu bringen,
- Befeuchten (ii) und Formgebung (II) der Vorform (12), um sie in Form zu bringen, und
- Schließen der Form (16), Trocknung der faserigen Struktur und Einspritzen von Duroplast in die Form, um die Matrix zu bilden, wobei die Oberflächenschale (14) vor und/oder während ihrer Formgebung (I), die in einem Abdruck (16a) einer Form (16) ausgeführt wird, befeuchtet (i) wird, wobei die Formgebung der Vorform direkt auf der Oberflächenschale im Abdruck der Form ausgeführt wird.

2. Verfahren nach Anspruch 1, wobei die Oberflächenschale (14) vor ihrer Formgebung (I) befeuchtet und in einer Hitzekammer getrocknet wird.

3. Verfahren nach Anspruch 2, wobei die Oberflächenschale (14) vor ihrer Trocknung mit einem Handhabungsgewebe (24) beschichtet wird und die Gesamtheit mit einer Vakuumtasche (26) bedeckt wird und während der Trocknung einem Teilvakuum unterzogen wird.

4. Verfahren nach Anspruch 3, wobei das Handhabungsgewebe (24) verwendet wird, um die getrocknete Oberflächenschale (14) im Abdruck (16a) der Form (16) zu positionieren.

5. Verfahren nach einem der Ansprüche 2 bis 4, wobei die Oberflächenschale (14) vor ihrer Befeuchtung (I) mittels eines Haftmittels (22) auf einem Träger (20) immobilisiert wird.

6. Verfahren nach einem der Ansprüche 2 bis 5, wobei die Oberflächenschale (14) während ihrer Formgebung (I) erneut befeuchtet wird.

7. Verfahren nach einem der Ansprüche 1 bis 6, wobei die Oberflächenschale (14) vor ihrer Befeuchtung (i) und/oder nach ihrer Befeuchtung und/oder während ihrer Formgebung (I) zugeschnitten (D) wird.

8. Verfahren nach einem der Ansprüche 1 bis 7, wobei die Vorform (12) und die Oberflächenschale (14) mit Wasser und/oder einem Klebrigmacher befeuchtet werden, wobei der Abdruck (16a) der Form (16) gegebenenfalls vor der Formgebung (I) der Oberflächenschale mit Wasser und/oder einem Klebrigmacher befeuchtet wird.

9. Verfahren nach einem der Ansprüche 1 bis 8, wobei die Form (16) verschlossen wird, indem eine Gegenform (32) daran angebracht wird, die ebenfalls einen Abdruck (16a) umfasst, in dem eine andere Oberflächenschale (14) in Form gebracht wird.

10. Verfahren nach einem der Ansprüche 1 bis 9, wobei die Oberflächenschale (14) aus gewebten Bändern (14a1) oder aus zwei überlagerten und aneinander genähten bidirektionalen Einlagen (14b) gebildet wird.

## Claims

1. A method for manufacturing a turbomachine composite part (10), such as a fan blade, this part comprising a fibrous structure that comprises a three-dimensional fibrous preform (12) coated with at least one surface fibrous web (14), and that is embedded in a polymer matrix, the method comprising the steps of:
- forming (I) the surface web to shape it,
- wetting (ii) and forming (II) the preform (12) to shape it, and
- closing the mold (16), drying the fibrous structure and injecting thermosetting resin into the mold in order to form said matrix, the surface web (14) being wetted (i) before and/or during its forming (I) which is carried out in a cavity (16a) of a mold (16), the forming of the preform being carried out directly on the surface web in the cavity of the mold.

2. The method according to claim 1, wherein the surface web (14) is wetted and oven dried prior to its forming (I).

3. The method according to claim 2, wherein prior to its drying, the surface web (14) is coated with a handling fabric (24), and the whole is covered with a vacuum bag (26) and subjected to a partial vacuum during drying.

4. The method according to claim 3, wherein the handling fabric (24) is used to position the dried surface web (14) in the cavity (16a) of the mold (16).

5. The method according to one of claims 2 to 4, wherein prior to its wetting (I), the surface web (14) is immobilized on a support (20) by an adhesive (22).

6. The method according to one of claims 2 to 5, wherein the surface web (14) is rewetted during its forming (I).

7. The method according to one of claims 1 to 6, wherein the surface web (14) is cut (D) before its wetting (i), and/or after its wetting, and/or during its forming (I).

8. The method according to one of claims 1 to 7, wherein the preform (12) and the surface web (14) are wetted with water and/or a tackifier, the cavity (16a) of the mold (16) being optionally wetted with water and/or a tackifier prior to the forming (I) of the surface web.

9. The method according to one of claims 1 to 8, wherein the mold (16) is closed by attaching a counter mold (32) also comprising a cavity (16a) in which a further surface web (14) is formed.

10. The method according to one of claims 1 to 9, wherein the surface web (14) is formed by woven ribbons (14a1), or by two superimposed bidirectional layers (14b) sewn together.
